(19) Europäisches Patentamt
European Patent Office
Office européen des brevets

(11) **EP 2 296 782 B1**

(12) **FASCICULE DE BREVET EUROPEEN**

(45) Date de publication et mention de la délivrance du brevet:
**21.06.2017 Bulletin 2017/25**

(51) Int Cl.:
***B01D 53/02*** *(2006.01)*   ***B01J 20/06*** *(2006.01)*

(21) Numéro de dépôt: **09753798.9**

(22) Date de dépôt: **14.05.2009**

(86) Numéro de dépôt international:
**PCT/EP2009/055838**

(87) Numéro de publication internationale:
**WO 2009/144143 (03.12.2009 Gazette 2009/49)**

(54) **PROCEDE DE TRAITEMENT D'UN GAZ POUR DIMINUER SA TENEUR EN DIOXYDE DE CARBONE**

VERFAHREN ZUR VERARBEITUNG EINES GASES ZUR VERRINGERUNG SEINES KOHLENDIOXIDGEHALTS

METHOD FOR PROCESSING A GAS FOR REDUCING THE CARBON DIOXIDE CONTENT THEREOF

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **28.05.2008 FR 0802892**

(43) Date de publication de la demande:
**23.03.2011 Bulletin 2011/12**

(73) Titulaire: **Rhodia Opérations**
**93306 Aubervilliers (FR)**

(72) Inventeurs:
• **HARLE, Virginie**
**F-60300 Senlis (FR)**
• **MIGNANI, Gérard**
**F-69008 Lyon (FR)**

(74) Mandataire: **Senninger, Thierry et al**
**Rhodia Operations**
**Département Brevets**
**Bureau 0.121**
**40, rue de la Haie Coq**
**93306 Aubervilliers Cedex (FR)**

(56) Documents cités:
**EP-A- 0 605 274**       **EP-A- 1 637 574**
**JP-A- H10 272 336**    **US-A- 4 937 059**
**US-A1- 2001 001 782**   **US-A1- 2004 123 736**

**Description**

La présente invention concerne un procédé de traitement d'un gaz pour diminuer sa teneur en dioxyde de carbone.

On sait que le dioxyde de carbone ($CO_2$) est un des gaz qui contribuent à l'effet de serre. Pour des raisons écologiques on cherche de plus en plus à en limiter les quantités produites.

Il existe déjà des procédés permettant de capter le $CO_2$ dans des gaz, notamment dans les fumées émises par des installations industrielles comme des turbines à gaz ou des chaudières.

Parmi ces procédés certains utilisent des amines en milieu solvant. Ces procédés ont pour inconvénient le coût important des amines et leur instabilité à haute température. D'autres procédés mettent en oeuvre des matériaux inorganiques à base d'alcalino-terreux comme le baryum ou le calcium, ou d'alcalin comme le potassium. Ces matériaux sont efficaces pour capter le $CO_2$ mais ont le désavantage de ne pouvoir relarguer celui-ci qu'à température élevée, par exemple supérieure à 350°C.

Il existe donc un besoin pour un procédé dans lequel le composé utilisé pour capter le $CO_2$ soit stable en température et, de préférence, susceptible de relarguer le $CO_2$ à température plus basse que dans les procédés connus.

L'objet de l'invention est de fournir un tel composé.

Dans ce but, la présente invention propose un procédé pour le traitement d'un gaz pour diminuer sa teneur en dioxyde de carbone tel que défini à la revendication 1. L'utilisation d'un composé de terre rare a comme avantage de permettre notamment un maximum du relargage du $CO_2$ adsorbé à une température qui peut être inférieure à 300°C et même d'au plus 250°C et en plus dans un plage de température plus restreinte que dans le cas des procédés de l'art antérieur, c'est-à-dire une plage dont l'amplitude peut être inférieure à 300°C.

D'autres caractéristiques, détails et avantages de l'invention apparaîtront encore plus complètement à la lecture de la description qui va suivre, ainsi que des divers exemples concrets mais non limitatifs destinés à l'illustrer.

Par terre rare on entend pour la suite de la description les éléments du groupe constitué par l'yttrium et les éléments de la classification périodique de numéro atomique compris inclusivement entre 57 et 71.

On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

En outre, les calcinations à l'issue desquelles sont données les valeurs de surface sont des calcinations sous air. Par ailleurs, les valeurs de surface spécifique qui sont indiquées pour une température et une durée données correspondent, sauf indication contraire, à des calcinations à un palier de température sur la durée indiquée. Une caractéristique principale de l'invention est l'utilisation d'un composé de terre rare pour capter ou adsorber le $CO_2$ contenu dans le gaz à traiter. Ce composé est à base d'un oxyde. On notera que pour la présente description, le terme oxyde quand il est utilisé au sujet du composé de terre rare s'entend non seulement au sens d'oxyde mais aussi au sens d'oxyde carbonaté car souvent les oxydes peuvent se carbonater par simple contact avec l'air et ils peuvent aussi contenir des nitrates. Dans ce cas, il est préférable de faire subir au composé un premier traitement thermique de régénération pour éliminer au moins partiellement les nitrates et carbonates de la surface. Ce traitement peut se faire par chauffage sous flux gazeux, notamment d'air, air qui peut contenir de la vapeur à des températures supérieures ou égales à celles utilisées dans le procédé pour régénérer le matériau après stockage de $CO_2$. Pour des questions d'économie du procédé, la température sera la plus faible possible, typiquement moins de 500°C, de préférence moins de 300°C.

Selon un mode de réalisation préféré de l'invention, la terre rare autre que le cérium est choisie parmi le lanthane ou le praséodyme. Ce mode de réalisation s'applique au cas où le composé est sous forme d'oxyde. On peut mentionner plus particulièrement les composés à base de cérium et de lanthane, de cérium et de praséodyme ou encore à base de cérium, de lanthane et de praséodyme. Selon un autre mode de réalisation, on utilise un composé contenant outre l'oxyde de cérium de l'oxyde de zirconium. Ce composé peut contenir une ou plusieurs terres rares.

On peut citer notamment dans le cadre de ce mode de réalisation, les composés à base de cérium, de zirconium et de praséodyme, à base de cérium, de zirconium et de lanthane ou encore à base de cérium, de zirconium, de praséodyme et de lanthane.

Dans ce mode de réalisation, les composés sont à base des oxydes des éléments cités (cérium, zirconium et autres terres rares).

D'une manière générale, dans le cas de composés à base de cérium et d'au moins un autre élément choisi parmi le zirconium et les terres rares, la proportion en cérium est d'au moins 80%, cette proportion étant exprimée en équivalent oxyde de cérium $CeO_2$ par rapport à la masse totale, dans le composé, du cérium et du ou des autres éléments exprimée en oxyde. La teneur en cérium peut être encore plus particulièrement d'au moins 90%.

Les proportions données ci-dessus s'appliquent au cas où le cérium et le ou les autres éléments sont sous forme d'oxydes dans le composé.

Ces proportions peuvent s'appliquer plus particulièrement au cas où la terre rare autre que le cérium est le lanthane et/ou le praséodyme.

La proportion (exprimée comme précédemment) en terre rare autre que le cérium ou en zirconium est habituellement d'au moins 0,5%, plus particulièrement d'au moins 1%.

Selon un autre mode de réalisation préféré, on utilise dans le procédé de l'invention soit un composé d'au moins une terre rare qui contient en outre du zirconium, soit un composé d'au moins deux terres rares, ce composé se présentant alors sous la forme d'une solution solide.

Par solution solide on entend que les diagrammes en diffraction X des composés révèlent, au sein de ceux-ci, l'existence d'une seule phase homogène. Par exemple, pour les composés les plus riches en cérium, cette phase correspond en fait à celle d'un oxyde cérique $CeO_2$ cristallisé et dont les paramètres de mailles sont plus ou moins décalés par rapport à un oxyde cérique pur, traduisant ainsi l'incorporation de l'autre élément, zirconium ou terre rare, dans le réseau cristallin de l'oxyde de cérium, et donc l'obtention d'une solution solide vraie.

Il peut être avantageux aussi d'utiliser un composé à base de cérium, de zirconium et, éventuellement, d'au moins une autre terre rare dans lequel la surface de celui-ci présente une teneur en cérium et, éventuellement, en au moins l'autre terre rare, plus élevée que la teneur moyenne, dans ce composé, en cérium et, le cas échéant en au moins l'autre terre rare, et où, au contraire, la partie intérieure de ce même composé présente une teneur en cérium et, le cas échéant, en au moins l'autre terre rare plus faible que cette teneur moyenne.

Il est préférable d'utiliser des composés dont la surface spécifique soit importante. Ainsi, on peut mettre en oeuvre des composés qui présentent une surface spécifique d'au moins 40 $m^2$/g, plus particulièrement d'au moins 70 $m^2$/g et encore plus particulièrement d'au moins 100 $m^2$/g, ces valeurs de surface s'appliquant à des composés ayant subi lors de leur préparation une calcination à une température au moins égale à 500°C.

On va donner, ci- après, quelques exemples des composés qui peuvent être mis en oeuvre dans la présente invention.

Ainsi, on peut utiliser notamment les oxydes de cérium à surface spécifique stabilisée. On entend par là les oxydes de cérium qui présentent une surface spécifique élevée même après avoir été exposés à des températures importantes.

On peut ainsi mentionner les oxydes de cérium décrits dans les demandes de brevet EP-A-153227, EP-A-153228, EP-A-239478, EP-A-275733. Ces oxydes peuvent présenter des surfaces d'au moins 85 $m^2$/g, notamment d'au moins 100 $m^2$/g, après calcination à une température comprise entre 350 et 450°C sur une durée de 6 heures par exemple.

On peut utiliser aussi l'oxyde de cérium décrit dans EP-A-300852 qui présente une surface spécifique d'au moins 15 $m^2$/g après calcination à une température comprise entre 800°C et 900°C pendant 2 heures au moins ou encore l'oxyde de cérium décrit dans EP-A-388567 qui présente une surface d'au moins 190 $m^2$/g après calcination à une température comprise entre 350°C et 450°C pendant 2 heures au moins avec en outre aussi une surface spécifique d'au moins 15 $m^2$/g après calcination à une température comprise entre 800°C et 900°C sur la même durée. Les oxydes qui ont été décrits dans les paragraphes ci-dessus peuvent avoir subi avantageusement une nouvelle calcination à 500°C sous air avant leur utilisation.

Comme composé intéressant et aussi à haute surface spécifique, on peut utiliser encore des compositions à base d'un oxyde de cérium et d'un oxyde de zirconium et plus particulièrement les compositions pour lesquelles on a une proportion atomique cérium/zirconium d'au moins 1.

On peut citer ainsi l'oxyde de cérium décrit dans EP-A-207857 qui présente une surface spécifique supérieure à 10 $m^2$/g jusqu'à une température de 900°C. Cet oxyde peut présenter notamment une teneur en oxyde de zirconium comprise entre 1 et 20% par rapport au poids de l'oxyde cérique. On peut aussi mentionner la composition à base d'oxyde de cérium et d'oxyde de zirconium qui fait l'objet de EP-A-605274 et dans laquelle le zirconium est en solution solide dans l'oxyde de cérium. Cette composition peut présenter une surface spécifique d'au moins 30 $m^2$/g après calcination à 800°C pendant 6 heures.

On peut encore utiliser, comme support, des compositions à haute surface spécifique du type à base d'un oxyde de cérium et d'un oxyde de zirconium et d'au moins un oxyde choisi parmi les oxydes de terre rare autre que le cérium.

De telles compositions sont notamment décrites dans EP-A-906244. Dans ce dernier document les compositions présentent une proportion atomique cérium/zirconium d'au moins 1 ainsi qu'une surface spécifique d'au moins 35 $m^2$/g après calcination 6 heures à 900°C. Cette surface peut être plus particulièrement d'au moins 40 $m^2$/g. Elle peut être encore plus particulièrement d'au moins 45 $m^2$/g. Ces compositions sont préparées par un procédé dans lequel on prépare un mélange en milieu liquide contenant un composé du cérium, un composé du zirconium, qui peut être notamment un nitrate de zirconyle obtenu par attaque nitrique d'un carbonate de zirconium, et un composé de terre rare; on chauffe ledit mélange; on récupère le précipité obtenu et on calcine ce précipité. Le mélange de départ est préparé en utilisant une solution de zirconium qui est telle que la quantité de base nécessaire pour atteindre le point équivalent lors d'un dosage acide-base de cette solution vérifie la condition rapport molaire $OH^-/Zr \leq 1{,}65$.

Des composés utilisables sont aussi ceux à base d'un oxyde de cérium et d'un oxyde de praséodyme et pour lesquels la proportion en praséodyme peut aller jusqu'à un rapport massique exprimé en oxyde de praséodyme par rapport à l'oxyde de cérium de 50%. Cette proportion est habituellement d'au moins 0,5%. Cette proportion peut ainsi être comprise entre 1 et 40%, notamment entre 1 et 20%, plus particulièrement entre 1 et 10%. Selon une variante, la composition peut comprendre en outre du zirconium. Des compositions de ce type sont décrites dans FR 2729309 A1 et qui présentent après calcination 6 heures à 400°C une surface spécifique d'au moins 10 m$^2$/g, de préférence d'au moins 60 m$^2$/g et plus particulièrement d'au moins 80 m$^2$/g.

En ce qui concerne les composés à base de cérium, de zirconium et, éventuellement, d'au moins une autre terre rare qui ont été décrits plus haut et pour lesquels les concentrations en cérium et en terre rare sont différentes en surface et à l'intérieur des composés, on peut obtenir de tels produits par imprégnation, par une solution comprenant un composé de cérium et éventuellement de la terre rare, d'un composé à base de cérium, de zirconium et de terre rare le cas échéant, préalablement préparé selon l'enseignement d'une des demandes de brevet mentionnées plus haut.

On va décrire ci-dessous un mode de réalisation particulier de l'invention qui met en oeuvre des compositions à base d'oxyde de cérium et d'au moins un oxyde d'une autre terre rare et qui ont la caractéristique de présenter des surfaces spécifiques particulièrement élevée puisque celle-ci est d'au moins 20 m$^2$/g après calcination à 1000°C pendant 5 heures.

Les compositions de ce mode de réalisation particulier consistent essentiellement en de l'oxyde de cérium et en un ou plusieurs oxydes d'une terre rare.

Par «consiste essentiellement», on entend que ces compositions considérées ne contiennent que les oxydes des éléments précités, cérium et autre terre rare et qu'elle ne contient pas d'oxyde d'un autre élément, comme le zirconium notamment, susceptible d'avoir une influence positive sur la stabilité de la surface spécifique de la composition. Par contre, les compositions peuvent contenir des éléments tels que des impuretés pouvant notamment provenir de son procédé de préparation, par exemple des matières premières ou des réactifs de départ utilisés.

La terre rare peut être plus particulièrement l'yttrium, le néodyme, le lanthane ou le praséodyme. Selon une variante le lanthane et le praséodyme sont présents en combinaison dans la composition.

La teneur en oxyde de terre rare est généralement d'au plus 25%, de préférence lorsque la terre rare est le lanthane, plus particulièrement d'au plus 20% et de préférence d'au plus 15% en masse. La teneur minimale n'est pas critique mais généralement elle est d'au moins 1%, plus particulièrement d'au moins 2% et de préférence d'au moins 5% en masse. Cette teneur est exprimée en oxyde de la terre rare par rapport à la masse de l'ensemble de la composition.

Les compositions de ce mode de réalisation particulier de l'invention peuvent présenter en outre une surface spécifique d'au moins 22 m$^2$/g après calcination à 1000°C pendant 5 heures. Plus généralement, des valeurs d'au moins environ 25 m$^2$/g peuvent être obtenues dans les mêmes conditions de calcination.

Les surfaces spécifiques des compositions de ce mode de réalisation particulier de l'invention peuvent rester encore élevées même à une température encore plus importante. Ainsi, ces surfaces peuvent être d'au moins 10 m$^2$/g, plus particulièrement d'au moins 14 m$^2$/g après calcination à 1100°C pendant 5 heures.

Enfin, les compositions de ce mode de réalisation peuvent présenter une surface spécifique d'au moins 30 m$^2$/g après calcination à 900°C pendant 5 heures. Plus généralement, des valeurs d'au moins environ 35 m$^2$/g peuvent être obtenues dans les mêmes conditions de calcination.

Ces compositions sont préparées par un procédé spécifique qui va être décrit maintenant.

Ce procédé est caractérisé en ce qu'il comprend les étapes suivantes :

- on forme un milieu liquide comprenant un composé du cérium;
- on chauffe le milieu à une température d'au moins 100°C;
- on sépare le précipité obtenu à l'issue de l'étape précédente du milieu liquide, on y ajoute un composé de l'autre terre rare et on forme un autre milieu liquide;
- on chauffe le milieu ainsi obtenu à une température d'au moins 100°C;
- on amène le milieu réactionnel obtenu à l'issue du chauffage précédent à un pH basique;
- on sépare le précipité issu de l'étape précédente et on le calcine.

La première étape du procédé consiste donc à former un milieu liquide comprenant un composé du cérium.

Le milieu liquide est généralement l'eau.

Le composé du cérium est de préférence choisi parmi les composés solubles. Ce peut être notamment un sel d'acide organique ou inorganique comme un nitrate, un sulfate, un acétate, un chlorure, un nitrate céri-ammoniacal.

De préférence, on utilise du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, de préférence, utiliser une solution de nitrate cérique obtenue selon le procédé d'oxydation électrolytique d'une solution de nitrate céreux tel que décrit dans le document FR-A-2 570 087, et qui constitue ici une matière première intéressante.

On notera ici que les solutions aqueuses de sels de cérium peuvent présenter une certaine acidité libre initiale qui peut être ajustée par l'addition d'une base ou d'un acide. Il est cependant autant possible de mettre en oeuvre une solution initiale de sels de cérium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

On notera enfin que lorsque le mélange de départ contient du cérium essentiellement sous forme III, il est préférable de faire intervenir dans le cours du procédé un agent oxydant, par exemple de l'eau oxygénée.

Il est aussi possible d'utiliser un sol comme composé de départ du cérium. Par sol on désigne tout système constitué de fines particules solides de dimensions colloïdales, c'est à dire des dimensions comprises entre environ 1 nm et environ 500nm, à base d'un composé de cérium ce composé étant généralement un oxyde et/ou un oxyde hydraté de cérium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le cérium peut se trouver soit totalement sous la forme de colloïdes, soit simultanément sous la forme d'ions et sous la forme de colloïdes.

Le mélange peut être indifféremment obtenu soit à partir de composés initialement à l'état solide que l'on introduira par la suite dans un pied de cuve d'eau par exemple, soit encore directement à partir de solutions de ces composés.

La seconde étape du procédé consiste à chauffer le milieu préparé à l'étape précédente à une température d'au moins 100°C.

La température à laquelle est chauffé le milieu est généralement comprise entre 100°C et 150°C, plus particulièrement entre 110°C et 130°C. L'opération de chauffage peut être conduite en introduisant le milieu liquide dans une enceinte close (réacteur fermé du type autoclave). Dans les conditions de températures données ci-dessus, et en milieu aqueux, on peut ainsi préciser, à titre illustratif, que la pression dans le réacteur fermé peut varier entre une valeur supérieure à 1 Bar ($10^5$ Pa) et 165 Bar (1,65. $10^7$ Pa), de préférence entre 5 Bar (5. $10^5$ Pa) et 165 Bar (1,65. $10^7$ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 30 minutes et 48 heures, de préférence entre 1 et 5 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

On obtient à l'issue du chauffage un précipité qui est séparé du milieu liquide par tout moyen convenable, par exemple par soutirage des eaux mères. On ajoute au précipité ainsi séparé un composé de l'autre terre rare en formant un second milieu liquide.

Le composé de terre rare peut être de même nature que le composé de cérium utilisé dans la première étape du procédé. Ce qui a été décrit plus haut pour ce composé s'applique donc ici au composé de terre rare qui peut être plus particulièrement choisi parmi les nitrates, les sulfates, les acétates, les chlorures.

Dans une autre étape du procédé, le second milieu liquide est chauffé à une température d'au moins 100°C.

Là encore, ce qui a été décrit plus haut pour le premier chauffage s'applique de même ici pour le second chauffage.

A l'issue de ce second chauffage on amène le milieu réactionnel obtenu à un pH basique. Pour cela on introduit dans le milieu réactionnel un composé basique. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférées dans la mesure où ils diminuent les risques de pollution par les cations alcalins ou alcalino terreux. On peut aussi mentionner l'urée. Le composé basique peut être plus particulièrement utilisé sous forme d'une solution.

La valeur du pH à laquelle est amené le milieu peut être plus particulièrement comprise entre 8 et 10, plus particulièrement entre 8 et 9.

Dans une dernière étape du procédé, le précipité récupéré est ensuite calciné. Cette calcination permet de développer la cristallinité du produit formé et elle peut être également ajustée et/ou choisie en fonction de la température d'utilisation ultérieure réservée à la composition de ce mode de réalisation particulier de l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 300°C et 1000°C.

Le procédé de l'invention peut être utilisé pour le traitement de tout type de gaz contenant du $CO_2$.

Ce peut être par exemple des gaz produits par des installations industrielles dans lesquelles s'effectue la combustion d'hydrocarbures, de charbon ou de tout combustible produisant du $CO_2$ comme des chaudières ou des turbines à gaz. Ce peut être aussi des gaz issus de procédés de raffinage de pétrochimie comme ceux issus des unités de craquage catalytique ou encore des gaz issus de cimenteries. Enfin le procédé de l'invention peut aussi être utilisé pour des gaz produits par des installations domestiques comme des chaudières à gaz ou au fuel.

Ces gaz peuvent comporter par exemple entre 50% à 80% d'azote, entre 5% à 20% de dioxyde de carbone ($CO_2$), entre 2% à 10% d'oxygène ($O_2$), et éventuellement d'autres impuretés telles que des SOx, des NOx, des poussières ou autres particules.

Ces gaz peuvent présenter une température allant de l'ambiante (c'est à dire entre 15°C et 25°C) et 850°C, notamment comprise entre 40°C et 500°C, ces températures n'étant pas limitatives et n'étant données qu'à titre d'exemple uniquement.

D'une manière connue, il est possible de faire subir aux gaz un traitement préalable pour éliminer les impuretés comme les SOx, NOx, poussières ou autres particules ou réduire les quantités de celles-ci.

Le traitement des gaz se fait par mise en contact de ceux-ci avec le composé de terre rare décrit plus haut. Cette mise en contact peut se faire dans un réacteur spécialement prévu pour celle-ci ou encore dans un échangeur ou un compresseur ou éventuellement tout autre appareil d'une installation à travers lequel passent les gaz.

Le composé doit avoir été mis en forme.

Il peut se présenter par exemple sous forme d'extrudé ou de bille. Le composé mis en forme peut comprendre en outre un liant. Ce liant est choisi parmi ceux que l'on utilise habituellement dans les techniques d'extrusion, comme par exemple la silice, l'alumine, la boehmite, les argiles, les silicates, les silico-aluminates, le sulfate de titane, les fibres céramiques. Ces liants sont présents dans les proportions généralement utilisées c'est à dire jusqu'à environ 30%, plus particulièrement d'au plus environ 15% en poids.

Le composé peut aussi être sous forme d'un revêtement (coating) sur un substrat céramique ou métallique ou encore sur les internes du réacteur : parois, plateaux distributeurs ou les internes d'un échangeur, d'un compresseur ou de tout appareil dans lequel peut passer le gaz à traiter.

Lors de la mise en contact du gaz à traiter et du composé à base de terre rare, le $CO_2$ du gaz s'adsorbe sur le composé et on récupère ainsi un gaz appauvri en $CO_2$.

Le procédé de l'invention peut comprendre une étape complémentaire de désorption du dioxyde de carbone du composé de terre rare à l'issue de laquelle on récupère le dioxyde de carbone. Cette désorption peut se faire par passage d'un gaz chaud sur ce composé. Ce gaz peut être par exemple du gaz naturel ou de l'air.

La température du gaz chaud est celle qui permet une désorption efficace du $CO_2$. Un avantage important de l'invention est que la température de ce gaz peut être peu élevée. La température de ce gaz peut être notamment d'au plus 350°C, plus particulièrement d'au plus 300°C et encore plus particulièrement d'au plus 250°C.

Des exemples vont maintenant être donnés.

EXEMPLE 1

Cet exemple concerne la préparation de composés à base de terre rare utilisables dans le procédé de l'invention

On prépare quatre composés dont la composition est donnée dans le tableau 1 ci-dessous.

Tableau 1

| Composé | $CeO_2$ (% poids) | $La_2O_3$ (% poids) | $ZrO_2$ (% poids) | $Pr_6O_{11}$ (% poids) | SBET [1] (m²/g) |
|---|---|---|---|---|---|
| Exemple 1-A | 90 | 0 | 5 | 5 | 70 |
| Exemple 1-B | 80 | 3 | 10 | 7 | 45 |
| Exemple 1-C | 90 | 5 | 0 | 5 | 73 |
| Exemple 1-D | 86 | 4 | 10 | 0 | 73 |
| (1) Il s'agit de la surface spécifique de la composition à l'issue de la préparation donnée dans les exemples. | | | | | |

La préparation des différents composés est donnée ci-dessous.

EXEMPLE 1-A

Cet exemple illustre la préparation de l'oxyde mixte de formule $CeO_2$-$ZrO_2$-$Pr_6O_{11}$ ayant la composition du tableau 1 et obtenu par un procédé du type de celui décrit dans EP-A-906244 mentionné plus haut et auquel on peut se référer.

Dans les proportions stoechiométriques requises pour l'obtention de l'oxyde mixte ci-dessus, on mélange une solution de nitrate cérique (obtenu selon le document FR-A-2 570 087) préneutralisée par ajout de $NH_4OH$ tel que r= -0,22, une solution de nitrate de praseodyme et une solution de nitrate de zirconyle qui répond à la condition rapport molaire OH /Zr = 1,17.

r représente le taux de neutralisation de la solution de cérium défini par l'équation suivante :

$$r = \frac{n3 - n2}{n1}$$

dans laquelle n1 représente le nombre total de moles de Ce IV présentes dans la solution après neutralisation; n2 représente le nombre de moles d'ions $OH^-$ effectivement nécessaires pour neutraliser l'acidité libre initiale apportée par la solution aqueuse de sel de cérium IV; et n3 représente le nombre total de moles d'ions OH apportées par l'addition de la base.

Le rapport molaire $OH^-/Zr$ correspond à la quantité de base qu'il faut rajouter pour atteindre le point équivalent lors du dosage acide base de la solution de nitrate de zirconyle.

La concentration de ce mélange (exprimée en oxyde des différents éléments) est ensuite ajustée à 80 g/l. Ce mélange est ensuite porté à 150°C pendant 4 heures.

Une solution d'ammoniaque est ensuite ajoutée au milieu réactionnel de telle sorte que le pH soit supérieur à 8,5. Le milieu réactionnel ainsi obtenu est porté à ébullition pendant 2 heures. Après décantation puis soutirage, on remet en suspension le produit solide et le milieu ainsi obtenu est traité pendant 1 heure à 100°C. Le produit est ensuite filtré puis calciné à 700°C sous air pendant 2 heures.

EXEMPLE 1-B

Cet exemple illustre la préparation de l'oxyde mixte de formule $CeO_2$-$ZrO_2$-$La_2O_3$-$Pr_6O_{11}$ ayant la composition du tableau 1.

Le mode opératoire est le même que celui de l'exemple 1-A, du nitrate de lanthane étant rajouté en plus avec les autres précurseurs. La calcination finale est faite à 850°C pendant 2 heures.

EXEMPLE 1-C

Cet exemple illustre la préparation de l'oxyde mixte de formule $CeO_2$-$La_2O_3$-$Pr_6O_{11}$ ayant la composition du tableau 1.

201,6 ml d'une solution de nitrate cérique à 90% mol d'ions cérium IV et contenant 50 g de $CeO_2$ sont neutralisés avec 5,7 ml d'une solution d'ammoniaque à 25% puis dilués avec 792,7 ml d'eau pure. Cette solution est ensuite chauffée à 100°C pendant 0,5 heure. Après élimination des eaux-mères 6,1 ml d'une solution de nitrate de lanthane contenant 2,63 g de $La_2O_3$ et 5,3 ml d'une solution de nitrate de praséodyme contenant 2,63 g de $Pr_6O_{11}$ sont ajoutés au milieu. De l'eau pure est ajoutée pour amener le volume total de la solution à 1 litre. La solution est ensuite chauffée à 120°C pendant 2 heures. Après refroidissement de la solution à 85°C une solution d'ammoniaque à 25% est ajoutée sous agitation de manière à ajuster le pH à 8,5. La suspension obtenue est filtrée sur un filtre Nutsche pour obtenir un précipité. Le précipité est calciné sous air à 300°C pendant 10 heures puis à 700°C pendant 2 heures.

EXEMPLE 1-D

Cet exemple illustre la préparation de l'oxyde mixte de formule $CeO_2$-$ZrO_2$-$La_2O_3$ ayant la composition du tableau 1.

Le mode opératoire est le même que celui de l'exemple 1-A, du nitrate de lanthane étant ajouté en remplacement du nitrate de praséodyme.

EXEMPLE 2 COMPARATIF

Cet exemple concerne la préparation d'un composé contenant un élément alcalino-terreux connu pour stocker le $CO_2$. Dans un bécher, muni d'un barreau aimanté, on chauffe à 80°C une solution contenant 4,10 g de nitrate de baryum (Prolabo Rectapur 99%) et 17,5 g d'eau déminéralisée.

On imprègne avec cette solution à 80°C 15,69 g d'alumine obtenue par calcination d'un gel de boehmite (Sasol Pural SB1) à 850°C sous air pendant 2 heures.

L'alumine imprégnée est alors séchée à 100°C pendant 3 heures. Cette procédure est répétée une deuxième fois avec la même quantité de la solution de nitrate de baryum. L'alumine ainsi obtenue est séchée à 100°C pendant 3 heures. La poudre obtenue est calcinée sous air à 500°C pendant 2 heures.

Le composé 2-E ainsi obtenu contient 80% en poids d'alumine et 20% en poids d'oxyde de baryum BaO. Il présente une surface spécifique de 81 m$^2$/g.

EXEMPLE 3

Cet exemple donne une comparaison des températures de relargage du $CO_2$ adsorbé sur les différents composés des exemples précédents.

L'adsorption du $CO_2$ a été réalisée dans les conditions suivantes. On passe ensuite un gaz synthétique à 10% de $CO_2$ dans l'air pendant 1 heure à un débit de 1l/h à température ambiante sur 10 g de chacun des composés 1-A à 2-E.

Pour réaliser cette mesure de température, on utilise la technique d'analyse thermique gravimétrique (ATG) qui consiste à chauffer environ 20 mg de chacun des composés des exemples précédents, pesés précisément, sous un courant d'air synthétique à raison de 30 ml/min. Une augmentation de température est appliquée entre la température ambiante et 700°C à raison d'une augmentation de 10°C/min ce qui provoque le relargage du $CO_2$ et l'émission de $CO_2$ dans le gaz en sortie d'appareil. La teneur en $CO_2$ du gaz sortant de l'appareil est déterminée par spectrométrie de masse.

Le tableau 2 ci-dessous compare la fenêtre de température de départ de $CO_2$, caractérisée par une température minimale à partir de laquelle du $CO_2$ est émis et une température finale à laquelle l'émission de $CO_2$ s'arrête. Entre ces deux températures du $CO_2$ est émis en continu. On mentionne également la température appelée température maximale qui correspond à la température à laquelle le maximum de $CO_2$ est émis.

Tableau 2

| Composé | Température minimale (°C) | Température finale (°C) | Température maximale (°C) |
|---|---|---|---|
| 1-A | 50 | 240 | 120 |
| 1-B | 50 | 220 | 100 |
| 1-C | 50 | 250 | 100 |
| 1-D | 50 | 240 | 120 |
| 2-E comparatif | 80 | 630 | 240 |

On constate que les quatre composés conformes à l'invention contenant du cérium, éventuellement du zirconium, du lanthane et/ou du praséodyme (1-A à 1-D) conduisent à un relargage du $CO_2$ sur une plage plus restreinte de température, généralement entre 50 et 250°C, alors que le composé comparatif (2-E) conduit à une émission de $CO_2$ sur une fenêtre plus large, notamment jusque 630°C. La température maximale de relargage du $CO_2$ est également plus basse sur les composés 1-A à 1-D : 100 à 120°C contre 240°C pour le composé 2-E.

**Revendications**

1. Procédé de traitement d'un gaz pour diminuer sa teneur en dioxyde de carbone, dans lequel on met en contact le gaz avec un composé d'au moins une terre rare ce par quoi on adsorbe le dioxyde de carbone sur le composé et on obtient un gaz appauvri en dioxyde de carbone, **caractérisé en ce qu'**on utilise un composé qui est à base d'un oxyde de cérium et d'au moins un oxyde d'un élément choisi parmi le zirconium et les terres rares autres que le cérium et dont la proportion en cérium est d'au moins 80% en masse, cette proportion étant exprimée en équivalent oxyde de cérium par rapport à la masse totale dans le composé du cérium et du ou des autres éléments exprimée en oxyde.

2. Procédé selon la revendication 1, **caractérisé en ce que** la terre rare autre que le cérium est choisie parmi le lanthane ou le praséodyme.

3. Procédé selon l'une des revendications précédentes, **caractérisé en ce que** le composé se présente sous la forme d'une solution solide.

**4.** Procédé selon l'une des revendications précédentes, **caractérisé en ce que** le composé est à base d'un oxyde de cérium, d'un oxyde de zirconium et d'au moins un oxyde choisi parmi les oxydes de terre rare autres que le cérium, présente une proportion atomique cérium/zirconium d'au moins 1 et une surface spécifique d'au moins 35 m$^2$/g, plus particulièrement d'au moins 40 m$^2$/g, encore plus particulièrement d'au moins 45 m$^2$/g après calcination sous air, 6 heures à 900°C.

**5.** Procédé selon la revendication 1, **caractérisé en ce qu'**on utilise un composé qui consiste en de l'oxyde de cerium et en un ou plusieurs oxydes d'une autre terre rare dont la proportion est d'au plus 20% en masse, cette proportion étant exprimée en oxyde(s) de la terre rare par rapport à la masse de l'ensemble et qui présente une surface spécifique d'au moins 20 m$^2$/g après calcination sous air, à 1000°C pendant 5 heures.

**6.** Procédé selon la revendication 5, **caractérisé en ce qu'**on utilise un composé dans lequel l'autre terre rare est choisie parmi l'yttrium, le néodyme, le lanthane ou le praséodyme.

**7.** Procédé selon l'une des revendications précédentes, **caractérisé en ce qu'**il comprend une étape complémentaire de désorption du dioxyde de carbone du composé d'au moins une terre rare à l'issue de laquelle on récupère le dioxyde de carbone.

**8.** Procédé selon la revendication 7, **caractérisé en ce qu'**on effectue l'étape de désorption par passage d'un gaz chaud sur ledit composé, notamment un gaz à une température d'au plus 250°C.

**Patentansprüche**

**1.** Verfahren zur Verarbeitung eines Gases zur Verringerung seines Kohlendioxidgehalts, bei welchem das Gas mit einer Verbindung mindestens einer Seltenerde in Berührung gebracht wird, wobei das Kohlendioxid auf die Verbindung adsorbiert wird und ein an Kohlendioxid verarmtes Gas erhalten wird, **dadurch gekennzeichnet, dass** eine Verbindung verwendet wird, die auf einem Ceroxid und mindestens einem Oxid eines Elements, ausgewählt aus Zirkonium und anderen Seltenerden als Cer, basiert und deren Cergehalt mindestens 80 Masse-% beträgt, wobei dieser Gehalt als Ceroxid-Äquivalent bezogen auf die Gesamtmasse von Cer und des oder der anderen Elemente, ausgedrückt als Oxid, in der Verbindung ausgedrückt wird.

**2.** Verfahren nach Anspruch 1, **dadurch gekennzeichnet, dass** die andere Seltenerde als Cer aus Lanthan oder Praseodym ausgewählt wird.

**3.** Verfahren nach einem der vorhergehenden Ansprüche, **dadurch gekennzeichnet, dass** die Verbindung in Form einer festen Lösung vorliegt.

**4.** Verfahren nach einem der vorhergehenden Ansprüche, **dadurch gekennzeichnet, dass** die Verbindung auf einem Ceroxid, einem Zirkoniumoxid und mindestens einem Oxid, ausgewählt aus den Oxiden von anderen Seltenerden als Cer, basiert, ein Atomverhältnis Cer/Zirkonium von mindestens 1 und eine spezifische Oberfläche von mindestens 35 m$^2$/g, bevorzugter mindestens 40 m$^2$/g, noch mehr bevorzugt mindestens 45 m$^2$/g, nach Calcinierung in Luft, 6 Stunden bei 900 °C, aufweist.

**5.** Verfahren nach Anspruch 1, **dadurch gekennzeichnet, dass** eine Verbindung verwendet wird, die aus Ceroxid und einem oder mehreren Oxiden einer anderen Seltenerde besteht, deren Gehalt mehr als 20 Masse-% beträgt, wobei dieser Gehalt als Oxid(e) der Seltenerde bezogen auf die Gesamtmasse ausgedrückt wird, und die eine spezifische Oberfläche von mindestens 20 m$^2$/g nach Calcinierung in Luft, bei 1000 °C während 5 Stunden, aufweist.

**6.** Verfahren nach Anspruch 5, **dadurch gekennzeichnet, dass** eine Verbindung verwendet wird, wobei die andere Seltenerde aus Yttrium, Neodym, Lanthan oder Praseodym ausgewählt wird.

**7.** Verfahren nach einem der vorhergehenden Ansprüche, **dadurch gekennzeichnet, dass** dieses einen ergänzenden Schritt der Desorption von Kohlendioxid der Verbindung mindestens einer Seltenerde umfasst, am Ende von welchem das Kohlendioxid gewonnen wird.

**8.** Verfahren nach Anspruch 7, **dadurch gekennzeichnet, dass** der Schritt der Desorption durch Passage eines heißen Gases durch die Verbindung, insbesondere eines Gases bei einer Temperatur von höchstens 250 °C, durchgeführt wird.

**Claims**

1. Process for the treatment of a gas in order to reduce its content of carbon dioxide, in which the gas is brought into contact with a compound of at least one rare earth metal, whereby the carbon dioxide is adsorbed on the compound and a gas depleted in carbon dioxide is obtained, **characterized in that** use is made of a compound which is based on a cerium oxide and on at least one oxide of an element chosen from zirconium and the rare earth metals other than cerium, the cerium proportion of which is at least 80% by weight, this proportion being expressed as cerium oxide equivalent with respect to the total weight in the compound, expressed as oxide, of the cerium and of the other element or elements.

2. Process according to Claim 1, **characterized in that** the rare earth metal other than cerium is chosen from lanthanum or praseodymium.

3. Process according to either of the preceding claims, **characterized in that** the compound is provided in the form of a solid solution.

4. Process according to one of the preceding claims, **characterized in that** the compound is based on an oxide of cerium, on an oxide of zirconium and on at least one oxide chosen from oxides of rare earth metals other than cerium, exhibits a cerium/zirconium atomic proportion of at least 1 and a specific surface of at least 35 $m^2$/g, more particularly of at least 40 $m^2$/g and more particularly still of at least 45 $m^2$/g after calcination under air, 6 hours at 900°C.

5. Process according to Claim 1, **characterized in that** use is made of a compound which consists of cerium oxide and of one or more oxides of another rare earth metal, the proportion of which is at most 20% by weight, this proportion being expressed as oxide(s) of the rare earth metal with respect to the weight of the whole, and which exhibits a specific surface of at least 20 $m^2$/g after calcination under air at 1000°C for 5 hours.

6. Process according to Claim 5, **characterized in that** use is made of a compound in which the other rare earth metal is chosen from yttrium, neodymium, lanthanum or praseodymium.

7. Process according to one of the preceding claims, **characterized in that** it comprises an additional stage of desorption of the carbon dioxide from the compound of at least one rare earth metal, on conclusion of which the carbon dioxide is recovered.

8. Process according to Claim 7, **characterized in that** the desorption stage is carried out by passing a hot gas over the said compound, in particular a gas at a temperature of at most 250°C.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 153227 A
- EP 153228 A
- EP 239478 A
- EP 275733 A
- EP 300852 A
- EP 388567 A
- EP 207857 A
- EP 605274 A
- EP 906244 A
- FR 2729309 A1
- FR 2570087 A

**Littérature non-brevet citée dans la description**

- *The Journal of the American Chemical Society,* 1938, vol. 60, 309